# FASCICULE DE BREVET EUROPEEN

(11) **EP 3 019 351 B1**
(45) Date de publication et mention de la délivrance du brevet: **20.09.2017**
(21) Numéro de dépôt: 14739773.1
(22) Date de dépôt: 10.07.2014
(51) Int. Cl.: B60C 13/02, B60C 13/04

(54) **PNEUMATIQUE POUR VELO**
FAHRRADREIFEN
BICYCLE TYRE

(30) Priorité: 12.07.2013 FR 1356856
(43) Date de publication de la demande: 18.05.2016
(73) Titulaire: Compagnie Générale des Etablissements Michelin, 63000 Clermont-Ferrand (FR)
(72) Inventeur: PETITJEAN, Sylvain, F-63040 Clermont-Ferrand Cedex 09 (FR); BESTGEN, Luc, F-63040 Clermont-Ferrand Cedex 09 (FR); OLSOMMER, David, F-63040 Clermont-Ferrand Cedex 09 (FR)
(74) Mandataire: Millanvois, Patrick Jacques Jean
(86) Numéro de dépôt international: PCT/EP2014/064797
(87) Numéro de publication internationale: WO 2015/004225

(56) Documents cités:
- EP-A1- 2 055 507
- CH-A- 303 501
- FR-A1- 2 353 406
- JP-A- H04 121 205
- US-A- 4 195 705

## Description

La présente invention concerne un pneumatique pour vélo, et plus particulièrement les flancs d'un pneumatique pour vélo.

Les flancs d'un pneumatique sont les portions latérales du pneumatique reliant une bande de roulement, destinée à entrer en contact avec un sol, à deux bourrelets, destinés à être montés sur une jante.

Il est connu qu'un pneumatique pour vélo peut coopérer avec un dispositif électrique, tel qu'un dispositif générateur d'électricité, permettant l'alimentation de l'éclairage du vélo sur lequel il est monté.

Il a été décrit, en particulier par les documents DE-4011567-A1 et US-5165776, un dispositif générateur d'électricité, pour l'éclairage d'un vélo, destiné à coopérer avec un pneumatique. Un tel pneumatique comprend une denture continue de génératrice radiale, positionnée circonférentiellement sur un flanc du pneumatique et destinée à coopérer avec une denture complémentaire d'un pignon du dispositif générateur d'électricité. La denture positionnée sur le flanc de pneumatique est conçue pour entraîner en rotation le pignon libre du dispositif générateur d'électricité.

Il est également connu qu'un pneumatique pour vélo, pour répondre à des exigences réglementaires, doit être détectable visuellement dans la nuit (voir par exemple le document FR-A-2353406).

Concernant la détection visuelle en environnement obscur d'un objet, il est usuel d'utiliser un dispositif rétro-réfléchissant qui est un système passif, basé sur l'application du système optique appelé catadioptre et destiné à signaler dans la nuit ou l'obscurité un objet. On appelle rétro-réflexion une réflexion dans laquelle les radiations lumineuses sont renvoyées dans une direction proche de celle dont elles proviennent, cette propriété étant maintenue malgré de grandes variations de la direction des radiations incidentes. On appelle dispositif rétro-réfléchissant un dispositif qui, lorsqu'il est irradié directionnellement, rétro-réfléchit une partie relativement importante de la radiation incidente.

Pour la détection visuelle d'un pneumatique, des matériaux de revêtement rétro-réfléchissants sont généralement incorporés aux flancs du pneumatique, en particulier pour un pneumatique pour véhicule à deux roues. Le règlement n°88, additif 87 à l'Accord des Nations Unies du 20 mars 1958, concernant l'adoption de conditions uniformes d'homologation et la reconnaissance réciproque de l'homologation des équipements et pièces de véhicules à moteur, définit les prescriptions uniformes relatives à l'homologation des pneus rétro-réfléchissants pour véhicule à deux roues. Un pneumatique rétro-réfléchissant, au sens du règlement n°88 précédemment cité, est un pneumatique prêt à être utilisé comprenant un cercle rétro-réfléchissant incorporé à chacun des flancs du pneumatique. Ce cercle rétro-réfléchissant est souvent une bande rétro-réfléchissante adhésive.

Par les matériaux et les formes utilisés pour un dispositif rétro-réfléchissant, les fabricants recherchent le meilleur indice de réflexion lumineuse, en limitant les pertes d'intensité par diffusion ou absorption dans le matériau. Les matières de base sont variées et adaptées aux divers usages. À titre d'exemples et de façon non exhaustive, on trouve dans le commerce des bandes adhésives, des tissus techniques, des peintures, des produits d'enduction à base de microbilles de verre jouant le rôle de pigment réfléchissant. Dans le cas d'un pneumatique pour vélo, une bande rétro-réfléchissante adhésive est fréquemment utilisée.

Ainsi, pour remplir les deux fonctions précédemment décrites respectivement de coopération avec un dispositif électrique et de détection visuelle, il faut pouvoir positionner, sur un flanc de pneumatique de hauteur de section limitée, à la fois une denture continue et une bande rétro-réfléchissante, tout en garantissant que les fonctions correspondantes sont correctement remplies.

L'invention vise ainsi à combiner sur au moins un flanc de pneumatique pour vélo une denture de génératrice sensiblement radiale, circonférentiellement positionnée sur le flanc du pneumatique et destinée à coopérer avec une denture complémentaire d'un dispositif électrique pour vélo, et une bande rétro-réfléchissante pour la détection visuelle du vélo dans l'obscurité.

L'invention propose pour cela un pneumatique pour vélo comprenant :
- deux flancs reliant une bande de roulement à deux bourrelets,
- une denture continue, de génératrice sensiblement radiale par rapport à l'axe de rotation du pneumatique de direction axiale, positionnée circonférentiellement sur une face axialement extérieure d'au moins un flanc et comprenant un matériau élastomérique, une bande rétro-réfléchissante décalée axialement et positionnée circonférentiellement sur le flanc, axialement à l'extérieur de la face axialement extérieure du flanc et radialement à l'extérieur de la denture, un support de bande étant axialement intercalé entre la bande rétro-réfléchissante et la face axialement extérieure du flanc et une face axialement extérieure du support de bande, sur laquelle est appliquée la bande rétro-réfléchissante, formant avec la direction radiale du pneumatique un angle au plus égal à 30°.

Dans ce qui suit, la direction radiale désigne la direction perpendiculaire à l'axe de rotation du pneumatique, la direction axiale désigne la direction de l'axe de rotation du pneumatique et la direction circonférentielle désigne la direction tangente à la circonférence de roulement du pneumatique. Par « radialement intérieur» et « radialement extérieur » on entend respectivement « plus proche, selon la direction radiale, de l'axe de rotation du pneumatique» et « plus éloigné, selon la direction radiale, de l'axe de rotation du pneumatique ». Par « axialement intérieur» et « axialement extérieur » on entend respectivement « plus proche, selon la direction axiale, du plan équatorial du pneumatique» et « plus éloigné, selon la direction axiale, du plan équatorial du pneumatique », le plan équatorial du pneumatique étant le plan passant par le milieu de la bande de roulement et perpendiculaire à l'axe de rotation du pneumatique.

Une denture continue est une juxtaposition de dents, définie géométriquement par une génératrice. Une génératrice sensiblement radiale forme un angle faible avec la direction radiale du pneumatique. Plus précisément une génératrice sensiblement radiale forme un angle au plus égal à 45°, avec la direction tangente à la face axialement extérieure du flanc et située dans un plan méridien ou radial du pneumatique perpendiculaire à l'axe de rotation du pneumatique.

En outre cette denture est positionnée circonférentiellement sur une face axialement extérieure d'au moins un flanc du pneumatique, c'est-à-dire selon la direction circonférentielle.

La denture comprend un matériau élastomérique, qui est souvent le seul matériau constitutif de la denture. Toutefois, le matériau élastomérique peut être utilisé en combinaison avec un matériau textile, tel qu'un tissu en polyamide aliphatique ou nylon appliqué sur la face axialement extérieure de la denture.

Selon l'invention, une bande rétro-réfléchissante est positionnée circonférentiellement sur le flanc, axialement à l'extérieur de la face axialement extérieure du flanc et radialement à l'extérieur de la denture. En d'autres termes, la bande rétro-réfléchissante est positionnée parallèlement à la denture sur la portion de flanc non occupée par la denture. Généralement mais pas exclusivement, la denture est positionnée dans la portion radialement intérieure du flanc et la bande rétro-réfléchissante dans la portion radialement extérieure du flanc.

Egalement selon l'invention, un support de bande est axialement intercalé entre la bande rétro-réfléchissante et la face axialement extérieure du flanc. Ainsi la bande rétro-réfléchissante est décalée axialement, c'est-à-dire en relief, par rapport à la face axialement extérieure du flanc. Ceci permet à la bande rétro-réfléchissante de ne pas être dans l'ombre portée de la denture et d'être ainsi atteinte par les rayons lumineux.

Enfin, une face axialement extérieure du support de bande, sur laquelle est appliquée la bande rétro-réfléchissante, forme avec la direction radiale du pneumatique un angle au plus égal à 30°. Une valeur de l'angle d'inclinaison de la face axialement extérieure du support de bande d'un angle au plus égale à 30° par rapport à la direction radiale du pneumatique, garantit la rétro-réflexion sur la bande rétro-réfléchissante.

Selon un mode de réalisation préféré, la face axialement extérieure du support de bande forme avec la direction radiale du pneumatique un angle au plus égal à 20°, préférentiellement au plus égal à 10°. Cet intervalle de valeurs de l'angle d'inclinaison de la face axialement extérieure du support de bande garantit une optimisation de la rétro-réflexion sur la bande.

Il est avantageux que la distance radiale d entre le point, le plus radialement extérieur du support de bande, et le point équatorial, le plus radialement extérieur de la bande de roulement dans le plan équatorial (XZ) du pneumatique, soit au moins égale à 0.37 fois la largeur de section S.

Cette caractéristique de positionnement du support de bande, selon la direction radiale, garantit une absence de contact entre la bande rétro-réfléchissante et le sol lorsque le pneumatique roule avec un angle de carrossage pouvant atteindre 40°. L'angle de carrossage est l'angle formé par le plan équatorial avec la perpendiculaire au sol. Dans ces conditions, la bande rétro-réfléchissante, qui est le plus souvent constituée par la combinaison d'une enduction de caoutchouc, d'une peinture aluminium et de billes de verre, ne frotte par sur le sol. Il n'y a donc pas donc pas d'abrasion de la bande rétro-réfléchissante et de risque perte de son pouvoir rétro-réfléchissant

Le support de bande comprend avantageusement un matériau élastomérique, qui est un matériau facile à fixer sur le flanc lui-même en matériau élastomérique.

Le support de bande comprend préférentiellement un matériau élastomérique identique au matériau élastomérique de la denture. Cette identité de matériau permet la fabrication simultanée de la denture et de la bande rétro-réfléchissante, par pose d'un seul matériau élastomérique sur la face axialement extérieure du flanc.

Encore préférentiellement, la denture ayant un volume V₁, une largeur L₁ et un centre de gravité (G₁) positionné à une distance radiale R₁ de l'axe de rotation du pneumatique, et le support de bande ayant un volume V₂, une largeur L₂ et un centre de gravité (G₂) positionné à une distance radiale R₂ de l'axe de rotation du pneumatique, le rapport V₁*R₁/L₁ entre le produit du volume V₁ par la distance radiale R₁ et la largeur L₁ de la denture est égal au rapport V₂*R₂/L₂ entre le produit du volume V₂ par la distance radiale R₂ et la largeur L₂ du support de bande.

Lorsque les distances radiales R₁ et R₂ sont proches, la relation précédente peut être simplifiée: le rapport V₁/L₁ entre le volume V₁ et la largeur L₁ de la denture est alors égal au rapport V₂/L₂ entre le volume V₂ et la largeur L₂ du support de bande.

L'égalité de ces ratios géométriques définit l'épaisseur constante de la bande de section rectangulaire du matériau élastomérique cru, à poser sur le flanc du pneumatique avant l'étape de cuisson et de moulage du pneumatique. Cette épaisseur constante du matériau élastomérique cru permet la fabrication simultanée de la denture et du support de bande. Une épaisseur constante du matériau élastomérique cru, impliquant une surface plane, permet également une pose facile de la bande rétro-réfléchissante sur le support de bande et, le cas échéant, celle d'un matériau textile, par exemple de type tissu, sur la denture, avant l'étape de cuisson et de moulage du pneumatique.

L'invention concerne également un procédé de fabrication d'un pneumatique pour vélo selon le mode de réalisation préférentiel précédemment décrit. Ce procédé de fabrication comprend une étape de pose avant cuisson d'un élément de matériau élastomérique cru, généralement sous la forme d'une bande de section rectangulaire, d'épaisseur constante e, sur la face axialement extérieure d'au moins un flanc, destiné à former, après cuisson, une denture et un support de bande. L'élément de matériau élastomérique d'épaisseur constante e a une largeur L₁+L₂ et un volume V₁+V₂ et le rapport V₁*R₁/L₁ entre le produit du volume V₁ par la distance radiale R₁ et la largeur L₁ de la denture est égal au rapport V₂*R₂/L₂ entre le produit du volume V₂ par la distance radiale R₂ et la largeur L₂ du support de bande.

Selon un mode de réalisation préféré, pour un pneumatique pour vélo ayant une largeur de section S, comprenant une denture comprenant des dents, les dents ayant une hauteur h et une longueur 1 et comprenant un matériau élastomérique ayant une dureté Shore A , la hauteur h des dents est au moins égale à 0.6 mm et au plus égale à 3 mm, la longueur 1 des dents est au moins égale à 0.15 fois et au plus égale à 0.50 fois la largeur de section S du pneumatique et le matériau élastomérique des dents a une dureté Shore A au moins égale à 55 et au plus égale à 85.

Dans ce mode de réalisation préféré, la denture est particulièrement conçue pour coopérer avec un dispositif électrique de type assistance électrique, monté sur le vélo et apte à entraîner en rotation au moins une roue du vélo à l'aide d'un couple moteur généré par un moteur d'entraînement.

La géométrie extérieure d'un pneumatique est, en particulier, caractérisée par la largeur de section S du pneumatique qui est la distance axiale entre les points axialement les plus extérieurs des flancs du pneumatique. Une distance axiale est une distance mesurée parallèlement à l'axe de rotation du pneumatique. Les points axialement les plus extérieurs sont les deux points les plus éloignés, selon la direction axiale, du plan équatorial du pneumatique. Cette distance axiale est mesurée sur un pneumatique monté sur sa jante et gonflé à sa pression d'utilisation, au sens des normes de la European Tyre and Rim Technical Organization ou ETRTO.

Les intervalles de valeurs respectifs pour la hauteur h et la longueur 1 des dents impliquent que la surface de contact entre une dent de la denture du pneumatique et une dent de la denture complémentaire du pignon du dispositif d'assistance électrique, avec laquelle la denture du pneumatique est destinée à coopérer, est comprise dans un intervalle de valeurs permettant de passer le couple généré par le dispositif d'assistance électrique à la roue. Ces intervalles de valeurs pour la hauteur h et la longueur 1 prennent en compte des contraintes d'encombrement pour le positionnement de la denture sur le flanc du pneumatique.

Egalement selon ce mode de réalisation préféré, le matériau élastomérique des dents a une dureté Shore A au moins égale à 55 et au plus égale à 85. La dureté Shore A est une caractéristique mécanique d'un matériau élastomérique mesurée conformément à la norme DIN 53505.

Une valeur minimale de dureté Shore A garantit une rigidité de flexion, autour de la génératrice de la denture, minimale pour le passage du couple généré par le dispositif d'assistance électrique à la roue, pour une longueur et une hauteur de dent données. Une valeur maximale de dureté Shore A limite l'impact de la denture sur la rigidité du flanc du pneumatique, autour de la direction circonférentielle, et par conséquent sur le confort du cycliste.

La combinaison des intervalles de valeurs respectivement pour la hauteur des dents, la longueur des dents et la dureté Shore A du matériau élastomérique constitutif des dents permet de transmettre à la roue un couple moteur généré par le dispositif d'assistant électrique pouvant atteindre une valeur de 50 Nm, voire 60Nm.

Selon une variante préférée de ce mode de réalisation préféré, la denture comprend un matériau textile, de préférence de type polyamide aliphatique.

Le matériau textile est préférentiellement un polyamide aliphatique ou nylon, qui est un matériau couramment utilisé dans le domaine du pneumatique, en raison de son coût et de sa compatibilité avec les matériaux élastomériques.

Un matériau textile a le plus souvent la forme d'un tissu. Mais il peut également être constitué de renforts dispersés.

La présence d'un matériau textile, en plus du matériau élastomérique, permet d'améliorer la tenue à l'abrasion de la denture, résultant des cycles d'engrènement. Elle permet en outre de diminuer le bruit généré par un effet d'amortissement du matériau textile. Enfin, au niveau de la fabrication, un matériau textile, ayant une élasticité orthotrope, suit les déformations lors du moulage de la forme de la dent, au cours de la conformation du pneumatique lors de sa cuisson.

Encore plus préférentiellement, la denture comprend, axialement à l'extérieur du matériau élastomérique, un matériau textile, de préférence de type polyamide aliphatique.

Un matériau textile, positionné à l'extérieur du matériau élastomérique, présente l'avantage d'être facile à mettre en place. En outre, il permet d'augmenter le rendement de la transmission en offrant un meilleur glissement entre la denture du pneumatique et la denture complémentaire, diminuant ainsi les pertes par frottement par un effet lubrifiant.

Les caractéristiques et autres avantages de l'invention seront mieux compris à l'aide des figures schématiques et non représentées à l'échelle, en annexe:
- figure 1: vue en perspective d'une portion de pneumatique pour vélo comprenant une combinaison d'une denture et d'une bande rétro-réfléchissante selon l'invention,
- figure 2: vue d'une demi-coupe méridienne d'un pneumatique comprenant une combinaison d'une denture et d'une bande rétro-réfléchissante selon l'invention,
- figures 3A et 3B: vues en coupe d'une combinaison d'une denture et d'un support de bande selon l'invention, respectivement avant cuisson et après cuisson,
- figure 4: vue en coupe d'une denture selon l'invention, dans un plan de coupe perpendiculaire à la génératrice de la denture.

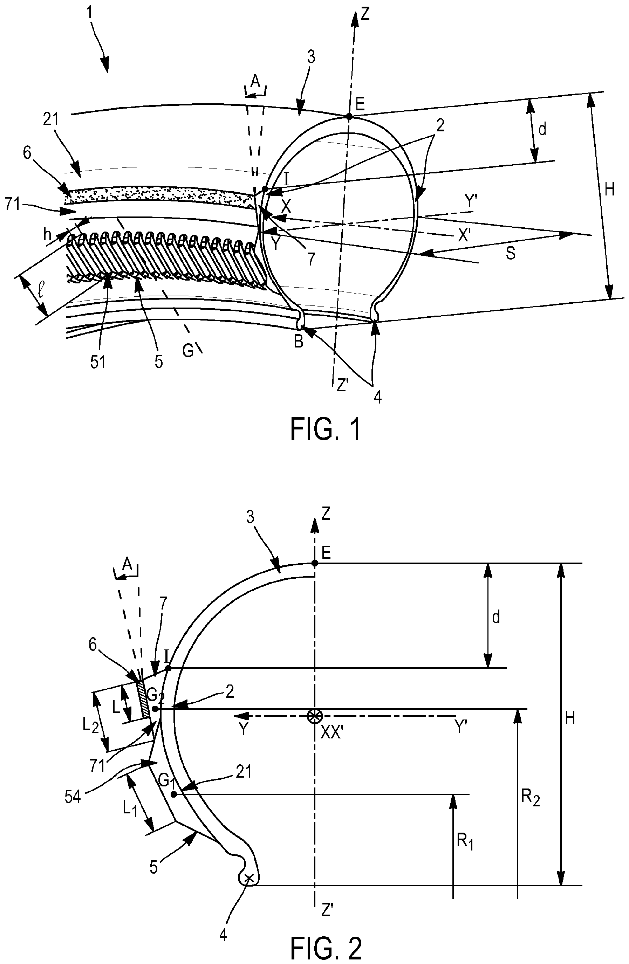

La figure 1 présente une vue en perspective d'une portion de pneumatique 1, comprenant la combinaison d'une denture 5 et d'une bande rétro-réfléchissante 6 selon l'invention. Le pneumatique 1 comprend deux flancs 2 reliant une bande de roulement 3, destinée à entrer en contact avec un sol (non représenté) à deux bourrelets 4, destinés à entrer en contact avec une jante de montage (non représentée). Les directions XX', YY' et ZZ' désignent respectivement la direction circonférentielle, tangente à la bande de roulement 3 du pneumatique et orientée selon le sens de roulement du pneumatique, la direction axiale, parallèle à l'axe de rotation (non représenté) du pneumatique, et la direction radiale, perpendiculaire à l'axe de rotation du pneumatique. Le pneumatique 1 a une largeur de section S, mesurée selon la direction axiale YY', entre les points les plus axialement extérieurs des faces axialement extérieures 21 des flancs 2. Le pneumatique 1 a une hauteur de section H, mesurée selon la direction radiale ZZ', qui est la distance radiale maximale entre les points les plus radialement intérieurs B des bourrelets 4 et le point équatorial E de la bande de roulement 3 qui est le point le plus radialement extérieur de la bande de roulement 3, situé dans le plan équatorial XZ du pneumatique 1. Le pneumatique 1 comprend une denture 5 continue, de génératrice G sensiblement radiale par rapport à l'axe de rotation du pneumatique de direction axiale YY', positionnée circonférentiellement, selon la direction XX', sur une face axialement extérieure 21 d'au moins un flanc 2. La denture 5 comprend des dents 51, les dents 51 ayant une hauteur h et une longueur 1 et comprenant un matériau élastomérique ayant une dureté Shore A. Selon l'invention, une bande rétro-réfléchissante 6 est positionnée circonférentiellement sur le flanc 2, axialement à l'extérieur de la face axialement extérieure 21 du flanc 2 et radialement à l'extérieur de la denture 5, un support de bande 7 est axialement intercalé entre la bande rétro-réfléchissante 6 et la face axialement extérieure 21 du flanc 2, et une face axialement extérieure 71 du support de bande 7, sur laquelle est appliquée la bande rétro-réfléchissante 6, forme avec la direction radiale ZZ' du pneumatique un angle A au plus égal à 30°. Le point I le plus radialement extérieur du support de bande 7 est situé à une distance radiale d du point équatorial E de la bande de roulement 3, au plus égale à 0.37 fois la largeur de section S.

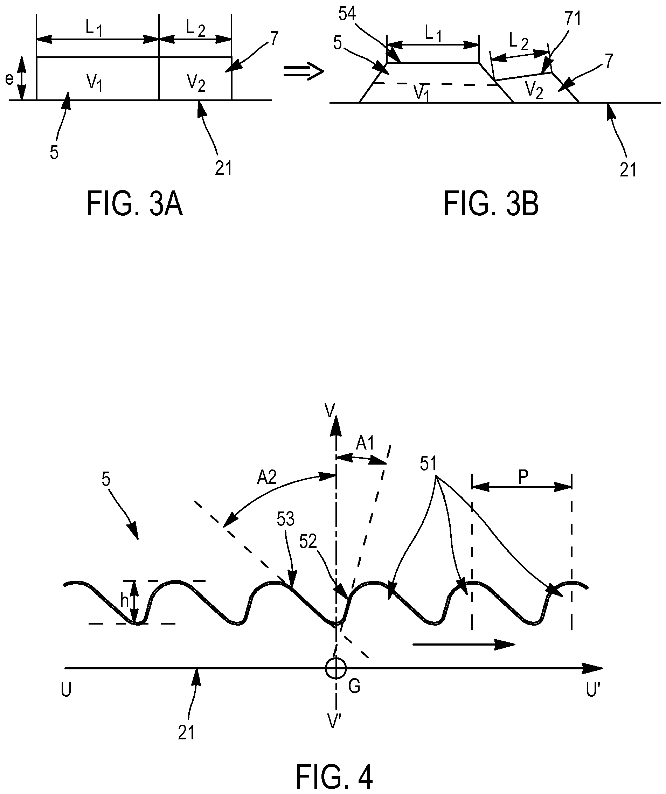

La figure 2 est une vue d'une demi-coupe méridienne d'un pneumatique comprenant une combinaison d'une denture 5 et d'une bande rétro-réfléchissante 6 selon l'invention. Les caractéristiques de la figure 2 ont été pour la plupart décrites pour la figure 1. La denture 5 a une face axialement extérieure 54 de largeur L₁, la face axialement extérieure 54 étant la surface théorique passant par les sommets des dents 51 représentées sur la figure 4. Le centre de gravité (G₁) de la denture 5 est positionné à une distance radiale R₁ de l'axe de rotation du pneumatique. Le support de bande 7 a une une face axialement extérieure 71 de largeur L₂. Le centre de gravité (G₂) du support de bande 7 est positionné à une distance radiale R₂ de l'axe de rotation du pneumatique. La bande rétro réfléchissante 6 de largeur L est positionnée sur la face axialement extérieure 71 du support de bande 7 de largeur L₂ supérieure à la largeur L. Sur la figure 2, la bande rétro-réfléchissante 6 est positionnée sur la portion radialement extérieure de la face axialement extérieure 71, mais elle pourrait être positionnée sur n'importe quelle portion de ladite face axialement extérieure 71. En outre, la face axialement extérieure 54 de la denture 5 peut être recouverte d'un matériau textile, par exemple un tissu en polyamide aliphatique (non représenté).

Les figures 3A et 3B représentent respectivement des vues en coupe de la combinaison d'une denture 5 et d'un support de bande 7 selon l'invention, respectivement avant cuisson et après cuisson. Avant cuisson, la figure 3A montre que l'élément avant cuisson, destiné à devenir après cuisson et moulage la combinaison de la denture 5 et du support de bande 7, est une bande de matériau élastomérique cru d'épaisseur e, de largeur L₁+L₂ et de volume V₁+V₂, positionnée sur la face axialement extérieure 21 du flanc 2. Cet élément est soit constitué d'un seul matériau élastomérique, soit constitué de la superposition d'un matériau élastomérique et d'un matériau textile, le plus souvent de type tissu. Après cuisson et moulage, on obtient, sur la figure3B, la combinaison de la denture 5 et du support de bande 7 selon l'invention, avec leurs faces axialement extérieures respectives 54 et 71 respectivement de largeurs L₁ et L₂. Les volumes V1 et V2 sont les volumes respectifs de la denture 5 et du support de bande 7. Le volume V₁ de la denture 5 est un volume réel de matériau élastomérique, qui ne prend pas en compte les espaces entre les dents.

La figure 4 est une vue en coupe d'une denture 5 selon l'invention, dans un plan de coupe UV, perpendiculaire à la génératrice G de la denture 5. La denture 5 est constituée d'une juxtaposition de dents 51, espacées d'un pas p. Le pas p est la distance mesurée entre les sommets de deux dents 51 consécutives, selon la direction UU' parallèle à la face axialement extérieure 21 du flanc 2. Chaque dent 51 a une hauteur h, mesurée entre la base et le sommet de la dent 51, selon la direction VV' perpendiculaire à la face axialement extérieure 21 du flanc 2. Chaque dent 51 comprend une face motrice 52 et une face non motrice 53. Dans le mode de réalisation représenté sur la figure 4, l'angle d'ouverture A₁ de la face motrice 52, par rapport à la direction VV', est inférieur à l'angle d'ouverture A₂ de la face non motrice 53, par rapport à la direction VV'. La figure 4 illustre des dents comportant des faces motrice et non motrice rectilignes. Dans le cas d'une face curviligne, l'angle d'ouverture décrit ci-dessus doit être mesuré entre la tangente au point de la face curviligne correspondant à la demi hauteur de dent et la direction VV'.

Cette invention a été plus particulièrement étudiée pour un pneumatique pour vélo de dimension 37-622, dont un flanc comprend une denture ayant un pas p égal à 2.3 mm et ayant des dents ayant une longueur 1 égale à 9.5 mm et une hauteur h égale à 0.94 mm. Une bande rétro-réfléchissante ayant une largeur égale à 5 mm est positionnée circonférentiellement sur un support de bande, dont la face axialement extérieure forme un angle de 11° par rapport à la direction radiale. L'élément en matériau élastomérique cru, tel que présenté à la figure 2, a une épaisseur constante égale à 1.1 mm et des largeurs L₁ et L₂ respectivement égales à 17 mm et 7 mm. Il a été constaté que les fonctions d'engrènement et de rétro-réflexion étaient assurées de façon satisfaisante avec ce type de conception.

Cette invention s'étend à tout type de géométrie de denture (profil de dent, profil de génératrice), à tout type de matériau élastomérique seul ou en combinaison avec un matériau textile.

## Revendications

1. Pneumatique (1) pour vélo, comprenant :
- deux flancs (2) reliant une bande de roulement (3) à deux bourrelets (4),
- une denture (5) continue, de génératrice (G) sensiblement radiale par rapport à l'axe de rotation du pneumatique de direction axiale (YY'), positionnée circonférentiellement sur une face axialement extérieure (21) d'au moins un flanc (2) et comprenant un matériau élastomérique, et
- une bande rétro-réfléchissante,
**caractérisé en ce que** la bande rétro-réfléchissante (6) est décalée axialement, et est positionnée circonférentiellement sur le flanc (2), axialement à l'extérieur de la face axialement extérieure (21) du flanc (2) et radialement à l'extérieur de la denture (5), **en ce qu'**un support de bande (7) est axialement intercalé entre la bande rétro-réfléchissante (6) et la face axialement extérieure (21) du flanc (2) **et en ce qu'**une face axialement extérieure (71) du support de bande (7), sur laquelle est appliquée la bande rétro-réfléchissante (6), forme avec la direction radiale (ZZ') du pneumatique un angle (A) au plus égal à 30°.

2. Pneumatique (1) pour vélo selon la revendication 1 **dans lequel** la face axialement extérieure (71) du support de bande (7) forme avec la direction radiale (ZZ') du pneumatique un angle (A) au plus égal à 20°, préférentiellement au plus égal à 10°.

3. Pneumatique (1) pour vélo selon l'une des revendications 1 ou 2 **dans lequel** la distance radiale d entre le point (I), le plus radialement extérieur du support de bande (7), et le point équatorial (E), le plus radialement extérieur de la bande de roulement (3) dans le plan équatorial (XZ) du pneumatique, est au moins égale à 0.37 fois la largeur de section S.

4. Pneumatique (1) pour vélo selon l'une quelconque des revendications 1 à 3 **dans lequel** le support de bande (7) comprend un matériau élastomérique.

5. Pneumatique (1) pour vélo selon l'une quelconque des revendications 1 à 4 **dans lequel** le support de bande (7) comprend un matériau élastomérique identique au matériau élastomérique de la denture (5).

6. Pneumatique (1) pour vélo selon l'une quelconque des revendications 1 à 5, la denture (5) ayant un volume V₁, une largeur L₁ et un centre de gravité (G₁) positionné à une distance radiale R₁ de l'axe de rotation du pneumatique, et le support de bande (7) ayant un volume V₂, une largeur L₂ et un centre de gravité (G₂) positionné à une distance radiale R₂ de l'axe de rotation du pneumatique, **dans lequel** le rapport V₁*R₁/L₁ entre le produit du volume V₁ par la distance radiale R₁ et la largeur L₁ de la denture (5) est égal au rapport V₂*R₂/L₂ entre le produit du volume V₂ par la distance radiale R₂ et la largeur L₂ du support de bande (7).

7. Procédé de fabrication d'un pneumatique (1) pour vélo selon la revendication 6 comprenant une étape de pose avant cuisson d'un élément de matériau élastomérique (8) d'épaisseur constante e, sur la face axialement extérieure (21) d'au moins un flanc (2), destiné à former, après cuisson, une denture (5) et un support de bande (7), la denture (5) ayant un volume V , une largeur L₁ et un centre de gravité (G₁) positionné à une distance radiale R₁ de l'axe de rotation du pneumatique, et le support de bande (7) ayant un volume V₂ , une largeur L₂ et un centre de gravité (G₂) positionné à une distance radiale R₂ de l'axe de rotation du pneumatique, le rapport V₁*R₁/L₁ entre le produit du volume V₁ par la distance radiale R₁ et la largeur L₁ de la denture (5) étant égal au rapport V₂*R₂/L₂ entre le produit du volume V₂ par la distance radiale R₂ et la largeur L₂ du support de bande (7), et l'élément de matériau élastomérique (8) d'épaisseur constante e ayant une largeur L₁+L₂ et un volume V₁+V₂.

8. Pneumatique (1) pour vélo selon l'une des revendications 1 à 6, ayant une largeur de section S, et comprenant une denture (5) comprenant des dents (51), les dents (51) ayant une hauteur h et une longueur L₁ et comprenant un matériau élastomérique ayant une dureté Shore A, **dans lequel** la hauteur h des dents (51) est au moins égale à 0.6 mm et au plus égale à 3 mm, la longueur L₁ des dents (51) est au moins égale à 0.15 fois et au plus égale à 0.50 fois la largeur de section S du pneumatique, et le matériau élastomérique des dents (51) a une dureté Shore A au moins égale à 55 et au plus égale à 85.

9. Pneumatique (1) pour vélo selon l'une quelconque des revendications 1 à 6 et 8 **dans lequel** la denture (5) comprend un matériau textile, de préférence de type polyamide aliphatique.

## Patentansprüche

1. Fahrradreifen (1), welcher umfasst:
- zwei Seitenwände (2), die einen Laufstreifen (3) mit zwei Wülsten (4) verbinden,
- eine durchgehende Verzahnung (5) mit einer Erzeugenden (G), die im Wesentlichen radial bezüglich der Drehachse der Reifens mit axialer Richtung (YY') ist, welche in Umfangsrichtung auf einer axial äußeren Fläche (21) wenigstens einer Seitenwand (2) positioniert ist und ein elastomeres Material umfasst, und
- einen reflektierenden Streifen,
**dadurch gekennzeichnet, dass** der reflektierende Streifen (6) axial versetzt ist und in Umfangsrichtung auf der Seitenwand (2) positioniert ist, axial außerhalb der axial äußeren Fläche (21) der Seitenwand (2) und radial außerhalb der Verzahnung (5), dadurch, dass ein Streifenträger (7) axial zwischen dem reflektierenden Streifen (6) und der axial äußeren Fläche (21) der Seitenwand (2) angeordnet ist, und dadurch, dass eine axial äußere Fläche (71) des Streifenträgers (7), auf welcher der reflektierende Streifen (6) angebracht ist, mit der radialen Richtung (ZZ') des Reifens einen Winkel (A) bildet, der höchstens gleich 30° ist.

2. Fahrradreifen (1) nach Anspruch 1, wobei die axial äußere Fläche (71) des Streifenträgers (7) mit der radialen Richtung (ZZ') des Reifens einen Winkel (A) bildet, der höchstens gleich 20°, vorzugsweise höchstens gleich 10° ist.

3. Fahrradreifen (1) nach einem der Ansprüche 1 oder 2, wobei der radiale Abstand d zwischen dem Punkt (I), welcher der radial äußerste des Streifenträgers (7) ist, und dem äquatorialen Punkt (E), welcher der radial äußerste des Laufstreifens (3) in der Äquatorialebene (XZ) des Reifens ist, wenigstens das 0,37-fache der Querschnittsbreite S beträgt.

4. Fahrradreifen (1) nach einem der Ansprüche 1 bis 3, wobei der Streifenträger (7) ein elastomeres Material umfasst.

5. Fahrradreifen (1) nach einem der Ansprüche 1 bis 4, wobei der Streifenträger (7) ein elastomeres Material umfasst, das mit dem elastomeren Material der Verzahnung (5) identisch ist.

6. Fahrradreifen (1) nach einem der Ansprüche 1 bis 5, wobei die Verzahnung (5) ein Volumen V₁, eine Breite L₁ und einen Schwerpunkt (G₁), der in einem radialen Abstand R₁ von der Drehachse des Reifens positioniert ist, aufweist und der Streifenträger (7) ein Volumen V₂, eine Breite L₂ und einen Schwerpunkt (G₂), der in einem radialen Abstand R₂ von der Drehachse des Reifens positioniert ist, aufweist, wobei das Verhältnis V₁*R₁/L₁ des Produkts des Volumens V₁ und des radialen Abstands R₁ zu der Breite L₁ der Verzahnung (5) gleich dem Verhältnis V₂*R₂/L₂ des Produkts des Volumens V₂ und des radialen Abstands R₂ zu der Breite L₂ des Streifenträgers (7) ist.

7. Verfahren zur Herstellung eines Fahrradreifens (1) nach Anspruch 6, welches einen Schritt des Aufsetzens, vor dem Vulkanisieren, eines Elements aus elastomerem Material (8) von konstanter Dicke e auf die axial äußere Fläche (21) wenigstens einer Seitenwand (2) umfasst, das dazu bestimmt ist, nach dem Vulkanisieren eine Verzahnung (5) und einen Streifenträger (7) zu bilden, wobei die Verzahnung (5) ein Volumen V₁, eine Breite L₁ und einen Schwerpunkt (G₁), der in einem radialen Abstand R₁ von der Drehachse des Reifens positioniert ist, aufweist und der Streifenträger (7) ein Volumen V₂, eine Breite L₂ und einen Schwerpunkt (G₂), der in einem radialen Abstand R₂ von der Drehachse des Reifens positioniert ist, aufweist, wobei das Verhältnis V₁*R₁/L₁ des Produkts des Volumens V₁ und des radialen Abstands R₁ zu der Breite L₁ der Verzahnung (5) gleich dem Verhältnis V₂*R₂/L₂ des Produkts des Volumens V₂ und des radialen Abstands R₂ zu der Breite L₂ des Streifenträgers (7) ist und das Element aus elastomerem Material (8) von konstanter Dicke e eine Breite L₁+L₂ und ein Volumen V₁+V₂ aufweist.

8. Fahrradreifen (1) nach einem der Ansprüche 1 bis 6, welcher eine Querschnittsbreite S aufweist und eine Verzahnung (5) umfasst, die Zähne (51) umfasst, wobei die Zähne (51) eine Höhe h und eine Länge L₁ aufweisen und ein elastomeres Material umfassen, das eine Shore-Härte A aufweist, wobei die Höhe h der Zähne (51) wenigstens gleich 0,6 mm und höchstens gleich 3 mm ist, die Länge L₁ der Zähne (51) wenigstens gleich dem 0,15-fachen und höchstens gleich dem 0,50-fachen der Querschnittsbreite S des Reifens ist und das elastomere Material der Zähne (51) eine Shore-Härte A aufweist, die wenigstens gleich 55 und höchstens gleich 85 ist.

9. Fahrradreifen (1) nach einem der Ansprüche 1 bis 6 und 8, wobei die Verzahnung (5) ein textiles Material umfasst, vorzugsweise vom Typ eines aliphatischen Polyamids.

## Claims

1. Bicycle tyre (1) comprising:
- two sidewalls (2) connecting a tread (3) to two beads (4),
- a continuous toothing (5) having a substantially radial generatrix (G) with respect to the rotation axis of the tyre in the axial direction (YY'), said toothing (5) being positioned circumferentially on an axially outer face (21) of at least one sidewall (2) and comprising an elastomeric material,and
- a retroreflective strip,
**characterized in that** the retroreflective strip (6) is axially offset, and is positioned circumferentially on the sidewall (2), axially on the outside of the axially outer face (21) of the sidewall (2) and radially on the outside of the toothing (5), **in that** a strip support (7) is interposed axially between the retroreflective strip (6) and the axially outer face (21) of the sidewall (2), **and in that** an axially outer face (71) of the strip support (7), to which the retroreflective strip (6) is applied, forms an angle (A) of at most equal to 30° with the radial direction (ZZ') of the tyre.

2. Bicycle tyre (1) according to Claim 1, **wherein** the axially outer face (71) of the strip support (7) forms an angle (A) of at most equal to 20°, preferably at most equal to 10°, with the radial direction (ZZ') of the tyre.

3. Bicycle tyre (1) according to either of Claims 1 and 2, **wherein** the radial distance d between the radially outermost point (I) of the strip support (7) and the radially outermost equatorial point (E) of the tread (3) in the equatorial plane (XZ) of the tyre is at least equal to 0.37 times the section width S.

4. Bicycle tyre (1) according to any one of Claims 1 to 3, **wherein** the strip support (7) comprises an elastomeric material.

5. Bicycle tyre (1) according to any one of Claims 1 to 4, **wherein** the strip support (7) comprises an elastomeric material identical to the elastomeric material of the toothing (5).

6. Bicycle tyre (1) according to any one of Claims 1 to 5, the toothing (5) having a volume V₁, a width L₁ and a centre of gravity (G₁) positioned at a radial distance R₁ from the rotation axis of the tyre, and the strip support (7) having a volume V₂, a width L₂ and a centre of gravity (G₂) positioned at a radial distance R₂ from the rotation axis of the tyre, **wherein** the ratio V₁*R₁/L₁ of the product of the volume V₁ multiplied by the radial distance R₁ to the width L₁ of the toothing (5) is equal to the ratio V₂*R₂/L₂ of the product of the volume V₂ multiplied by the radial distance R₂ to the width L₂ of the strip support (7).

7. Method for manufacturing a bicycle tyre (1) according to Claim 6, comprising a step of placing, prior to curing, an element of elastomeric material (8) of constant thickness e on the axially outer face (21) of at least one sidewall (2), this being intended to form, after curing, a toothing (5) and a strip support (7), the toothing (5) having a volume V₁, a width L₁ and a centre of gravity (G₁) positioned at a radial distance R₁ from the rotation axis of the tyre, and the strip support (7) having a volume V₂, a width L₂ and a centre of gravity (G₂) positioned at a radial distance R₂ from the rotation axis of the tyre, the ratio V₁*R₁/L₁ of the product of the volume V₁ multiplied by the radial distance R₁ to the width L₁ of the toothing (5) being equal to the ratio V₂*R₂/L₂ of the product of the volume V₂ multiplied by the radial distance R₂ to the width L₂ of the strip support (7), and the element of elastomeric material (8) of constant thickness e having a width L₁+L₂ and a volume V₁+V₂.

8. Bicycle tyre (1) according to one of Claims 1 to 6, having a section width S and comprising a toothing (5) comprising teeth (51), the teeth (51) having a height h and a length L₁ and comprising an elastomeric material having a Shore A hardness, **wherein** the height h of the teeth (51) is at least equal to 0.6 mm and at most equal to 3 mm, the length L₁ of the teeth (51) is at least equal to 0.15 times and at most equal to 0.50 times the section width S of the tyre, and the elastomeric material of the teeth (51) has a Shore A hardness of at least equal to 55 and at most equal to 85.

9. Bicycle tyre (1) according to any one of Claims 1 to 6 and 8, **wherein** the toothing (5) comprises a textile material, preferably of the aliphatic polyamide type.
